# EUROPEAN PATENT APPLICATION

(11) **EP 3 766 369 A1**
(43) Date of publication of application: **20.01.2021**
(21) Application number: 20382626.8
(22) Date of filing: 13.07.2020
(51) Int. Cl.: A43B 7/14, A43B 13/04, A43B 13/16, A43B 13/18, B29D 35/00, B29D 35/12

(54) **MANUFACTURING PROCEDURE FOR A SOLE FOR FOOTWEAR AND PRODUCT THUS OBTAINED**

(30) Priority: 18.07.2019 ES 201930663
(71) Applicant: Porta Cantó, Antonio Ramón, 03610 Petrel (Alicante) (ES)
(72) Inventor: Porta Cantó, Antonio Ramón, 03610 Petrel (Alicante) (ES)
(74) Representative: Sahuquillo Huerta, Jesús

(57) **Abstract**

A manufacturing process for a sole for footwear and a sole thus obtained that comprises an injected thermoplastic monobloc body characterised in that it integrates in its interior, at least one cushioned area of a material consisting of an expanded polyurethane granule mixed with a liquid polyurethane elastomer reinforced with silica nanofibres; and wherein both the injected thermoplastic of the sole and the cushioned areas are cured and moulded together

## Description

The object of this invention is a sole for footwear with a tread made of plastic material that comprises, in the ball and/or heel, highly expanded thermoplastic polyurethane granules, as well as its manufacturing procedure. This process means that it is very light, elastic by recovering its original shape after being compressed, with cushioning effect, low density, flexible and durable.

### STATE OF THE ART

In the state of the art, different soles with a similar object as that of the invention are known. Thus, document CN208114105U describes an insole made using bonded expanded polyurethane granules, deployed in the insole together with other plastic materials in a localised way. On the other hand, the BASF® company commercialises a product denominated INFINERGY® which, when it is formed, gives rise to a light and elastic material such that it recovers its original shape after being compressed. One of its possible applications is as a sole for sports footwear. Document EP2649896A2 refers to an insole wherein expanded thermoplastic polyurethane is inserted into the ball and heel and wherein the other areas are made using other polymeric materials other than TPU (expanded thermoplastic polyurethane). Finally, documents US2012329892A1, CN104760675A, ES2325663T3 and CN108851339A describe different soles and/or insole structures that use thermoplastic polyurethane.

Therefore, there is a need to design a manufacturing procedure for a sole or insole for footwear, as well as the insole itself that is light, elastic by recovering its original shape after compressing, with a cushioning effect, low density, flexible and durable. This objective is achieved by means of the invention as it is described in the independent claims. Embodiments are defined in the dependent claims of the invention.

### DESCRIPTION OF THE INVENTION

As indicated in the statement of this patent specification, the object of the invention is a sole for footwear that comprises an injected thermoplastic monobloc body that is characterised in that it integrates in its interior, at least one cushioned area of a material consisting of an expanded polyurethane granule mixed with a liquid polyurethane elastomer reinforced with silica nanofibres; and wherein both the injected thermoplastic of the sole and the cushioned areas are cured and moulded together.

In an embodiment of the invention, the granules of expanded polyurethane are of a size between 8-12mm. In another embodiment, the proportion of silica nanofibres with respect to the total weight of the liquid polyurethane is less than 1% w/w. In yet another embodiment, the proportion between the granules of expanded polyurethane and the liquid polyurethane reinforced with silica nanofibres is 70% - 30% w/w.

In a second aspect of the invention, the manufacture of a sole for footwear according to this invention comprises a first stage injecting a first thermoplastic compound into a bicomponent mould to form the shape of the sole; and wherein, once the sole itself is injected, a second compound, consisting of an expanded polyurethane mixed with a liquid polyurethane elastomer reinforced with silica nanofibres is injected; and wherein, the mould is subsequently closed and the whole is pressed until the compounds that form the sole are fully cured.

In an embodiment of the manufacturing process, the second compound, consisting of a granule of expanded polyurethane mixed with an elastomer of liquid polyurethane reinforced with silica nanofibres, is applied raw and uncured, adapting to the shape of the sole defined by the first thermoplastic compound.

The sole for footwear that is the object of the invention has the particularity of having, in specific areas, a cushioning of a material composed of specified quantities of catalytic reticulated polyurethane and granules of highly expanded thermoplastic. This compound has the characteristic of being light, very low density and elastic, since it has the capacity to very rapidly recover its original shape after being compressed whereby it is ideal for manufacturing cushioned areas, midsoles and heels, as well as for combining with other materials for the manufacture of soles or components for sports and/or street footwear, providing a cushioning effect and high flexibility for the manufacture of extraordinarily comfortable footwear for everyday use.

Thanks to the material used in the manufacture of the sole, it has the capacity to generate energy inverse to the movement of the foot when walking produced by incapacity of recovery, which facilitates movements when walking, generates less fatigue and results in less muscular and bone wear in the feet. In addition, it is a very durable material, easily recyclable, very stable to UV rays and resistant to everyday and continuous use.

Throughout the description and the claims, the word «comprises» and its variants is not intended to exclude other technical characteristics, additives, components or steps. For those skilled in the art, other objects, benefits and characteristics will be deduced partly from the invention and partly from putting the invention into practice. The following examples and drawings are provided for illustrative purposes and do not purport to restrict this invention. Furthermore, the invention covers all possible combinations of particular and preferred embodiments indicated herein.

### BRIEF DESCRIPTION OF THE DRAWINGS

The following very briefly describes a series of drawings that help to understand the invention better and expressly refer to one embodiment of said invention, which is illustrated as a non-limiting example of the same.

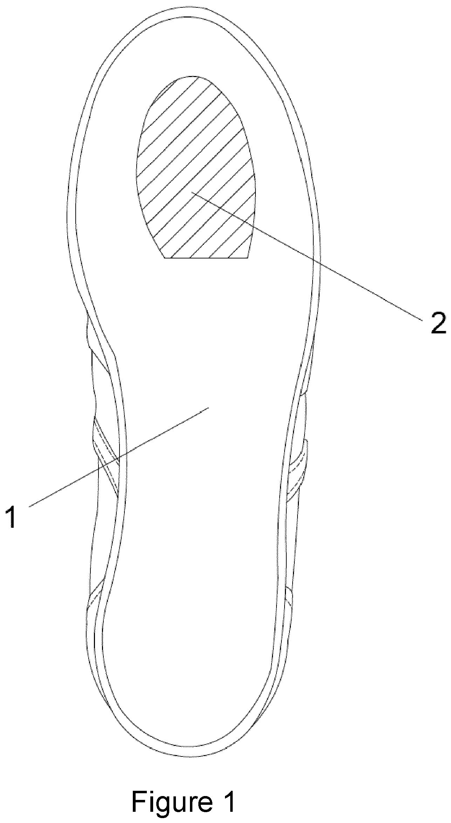

Figure 1 shows a schematic view of a sole according to this invention, wherein a monobloc body (1) that forms a sole according to the state of the art is shown and in which, at least one cushioned area is integrated (2).

### DETAILED DESCRIPTION OF ONE EMBODIMENT OF THE INVENTION

The object of this invention, as indicated in the statement of this patent specification is a sole 1- as well as its manufacturing procedure - that has the particularity of comprising internal areas 2 wherein a compound comprising an expanded polyurethane granule with an approximate diameter of 8-12mm mixed with a liquid polyurethane elastomer modified with silica nanofibres is applied in proportions of less than 1% w/w with respect to the total of liquid polyurethane in this practical example, and which has the particularity of providing the compound with more improved physical and mechanical properties. In particular, the use of silica nanofibres improves the formation of external polar chains, *Cross link* and the molecular structure of the resulting compound, providing the compound with a large amount of ultra-strong free chemical bonds that gives them great resistance to friction and compression forces.

The resulting compound (i.e. the expanded polyurethane granule plus a liquid polyurethane elastomer reinforced with silica nanofibres) is a hybrid compound formed by a thermoplastic (the granules of expanded polyurethane) and a thermostable compound (the elastomer of reinforced liquid polyurethane) with a variable proportion according to need and which, in a practical example, is quantified as 70% w/w of expanded polyurethane granule and 30% w/w of liquid polyurethane elastomer modified with silica nanofibres.

Therefore, by varying the percentage of expanded polyurethane granule and liquid elastomer reinforced with silica, the resulting hardness of the compound can be varied. Thus, the greater the amount of expanded polyurethane granule, the softer the resulting compound just as a lower percentage of granule and a greater amount of elastomer results in a compound with a greater hardness (for example, 60% w/w of expanded polyurethane and 40% w/w of liquid polyurethane elastomer modified with silica nanofibres). This therefore translates into greater or lesser resistance to compression according to how we vary the percentage parameters resulting in greater or lesser hardness.

The liquid polyurethane can be compact or foamed, with more or less foaming, according to whether higher or lower densities of the finished product are required. This compound results in much improved mechanical properties among which its great resistance to compression and its immediate recovery stand out.

The compound thus described is used in the sole of the invention by configuring cushioned parts inserted inside the internal part of the different models of soles, the front part or ball, the mid zone or shank, the back part or heel, the compound described above being prepared by mechanical means and placing this compound in a mould at an approximate temperature of 80°C, but wherein this temperature will depend on the parameters of temperature and internal working time of the mould for the mass production of the sole.

Thus, the first particularity of the invention is that the cushioned parts 2 of the compound indicated are not added subsequently but are elements that are manufactured and moulded with the sole itself in a single block 1. Indeed, both the material of the sole and the compound described above will be injected into the manufacturing mould and they will catalyse and cure inside the same mould, resulting in a very comfortable monobloc sole.

More specifically, for the manufacture of the sole of the invention, a bicomponent mould similar to a mould for a two-coloured sole is used wherein, firstly, the injection is carried out with a screw-piston system or by extrusion of the sole itself, generally manufactured in thermoplastic polyurethane or another plastic material.

Once the sole has been injected, the mould is opened and, by means of a mobile PU injector head composed of a reservoir for polyurethane granule combined with the mixture of liquid PU reinforced with silica nanofibres, the resulting composition is applied to the preformed sole. The mould is then closed and the sole-compound composite is pressed for 2 or 3 minutes. This time period, as well as the temperature (approximately 80°C) depend on the type of mould and other determinants of the manufacturing process that are well known by those who are skilled in the art.

The result of the process, once the sole has been removed from the bicomponent mould, is a monobloc sole 1 and fully finished with the cushioned areas 2 included without the need to make external insertions after injecting the sole.

This is possible because the malleable compound that is applied in the second part of the bicomponent mould (the composition described) is applied raw and uncured, adapting perfectly to the internal shape of the previously-injected sole and which was designed in the mechanised process of the mould for this purpose. Therefore, once the mould has been closed and subsequently opened, the finished sole is obtained with all the external parts for tread and the internal parts with the cushioning fully finished and ready for assembly work in the footwear production chain.

## Claims

1. A sole for footwear that comprises a monobloc body (1) of injected thermoplastic that is **characterised in that** it integrates in its interior at least one cushioned area (2) of a material consisting of granules of expanded polyurethane mixed with a liquid polyurethane elastomer reinforced with silica nanofibres; and wherein both the injected thermoplastic of the sole and the material of the cushioned areas are cured and moulded together.

2. The sole according to claim 1 wherein the granules of expanded polyurethane are of a size between 8-12mm.

3. The sole according to either of claims 1-2 wherein the proportion of silica nanofibres with respect to the total weight of liquid polyurethane is less than 1% w/w.

4. The sole according to any of claims 1-3 wherein the proportion between the granules of expanded polyurethane and liquid polyurethane reinforced with silica nanofibres is 70% - 30% w/w.

5. A manufacturing process for a sole for footwear according to any of claims 1 - 4 that comprises a first stage of injecting a first thermoplastic compound into a bicomponent mould to form the shape of the sole; and wherein, once the sole is injected, a second compound consisting of granules of expanded polyurethane mixed with a liquid polyurethane elastomer reinforced with silica nanofibres is injected; and wherein, the mould is then closed and the composite is pressed until the compounds that form the sole are fully cured.

6. The process of claim 5 wherein the second compound consisting of granules of expanded polyurethane mixed with a liquid polyurethane elastomer reinforced with silica nanofibres is applied raw and uncured in the mould, adapting to the shape of the sole defined by the first thermoplastic compound.
